# EUROPEAN PATENT SPECIFICATION

(11) **EP 2 092 173 B1**
(45) Date of publication and mention of the grant of the patent: **09.05.2018**
(21) Application number: 07856188.3
(22) Date of filing: 20.11.2007
(51) Int. Cl.: F02B 29/04

(54) **INTAKE DEVICE AND CHARGE-AIR COOLER UNIT IN AN INTERNAL COMBUSTION ENGINE**
EINLASSVORRICHTUNG UND LADELUFTKÜHLEREINHEIT BEI EINER BRENNKRAFTMASCHINE
UNITÉ À DISPOSITIF D'ADMISSION ET À REFROIDISSEUR D'AIR DE SURALIMENTATION DANS UN MOTEUR À COMBUSTION INTERNE

(30) Priority: 20.11.2006 FR 0655001
(43) Date of publication of application: 26.08.2009
(73) Proprietor: Valeo Systèmes de Contrôle Moteur, 95892 Cergy Pontoise (FR)
(72) Inventor: BURGOLD, Sven, 78120 Rambouillet (FR); PIETROWSKI, Herbert, 74385 Pleidelsheim (DE); FISCHER, Udo, 38104 Braunschweig (DE); ALBERT, Laurent, 60640 VERDERIE (FR)
(74) Representative: Santarelli
(86) International application number: PCT/EP2007/010009
(87) International publication number: WO 2008/061694

(56) References cited:
- DE-A1- 4 202 077
- DE-A1- 10 332 989
- DE-A1- 19 853 455
- DE-A1-102004 049 027
- FR-A1- 2 856 746
- JP-A- 2003 106 228
- US-A1- 2004 173 343

## Description

### Technical domain

The invention relates to an intake device and charge-air cooler unit in an internal combustion engine according to the preamble of claim 1.

### Prior art

Such a unit is described in WO 2005/116415 A1. The intake device features an intake housing containing an intake plenum chamber from which intake ports bifurcate to the cylinder inlets of the internal combustion engine. Located in front of the intake plenum chamber is a charge-air cooler in which the compressed combustion air is cooled down which is compressed upstream of the charge-air cooler in an exhaust-gas turbocharger. The charge-air cooler flanged to the housing of the intake device is made of two parts and comprises two parts arranged in parallel to each other, wherein the supplied combustion air bifurcates into two partial flows which are supplied to each charge-air cooler part. The cooled-down air is then supplied from both charge-air cooler parts into the intake plenum chamber from where the bifurcation takes place to each cylinder of the internal combustion engine.The intake plenum chamber of the intake device is designed as a transverse air duct from which the intake ports bifurcate to the individual cylinders of the internal combustion engine. The intake ports leading to the cylinder inlets are bent and have an angle of 90° so that the apertures of the intake ports are situated on a plane which is perpendicular to the plane of the charge-air cooler. This allows a laterally offset positioning of the intake device and charge-air cooler unit in relation to the cylinder head of the internal combustion engine.

Gas intake devices having at least some features similar to those in the preamble of claim 1 are also already known from German patent applications DE 10 2004 049 027 and DE 103 32 989 and French patent application FR 2 856 746.

### Disclosure of the invention

The invention is confronted with the task to create a compact and high-performance intake device and charge-air cooler unit using easy constructive measures.

According to the invention this problem will be solved by means of the characteristics of claim 1. The subclaims specify appropriate further developments.

The unit according to the invention, consisting of an intake device and a charge-air cooler, features an intake housing of the intake device via which combustion air can be supplied to the cylinders of the internal combustion engine, wherein the whole unit must be fixed via the intake housing at the cylinder head of the internal combustion engine. Apertures are realized in the intake housing which communicate with the corresponding cylinder inlets in the cylinder head.

The charge-air cooler is integrated into the intake housing in such a way that the flow direction of the charge air in the charge-air cooler is situated on a plane perpendicular to the component of the intake housing containing the apertures. This construction ensures that the charge-air cooler including the intake device can be positioned directly above the cylinder head so that the flow direction is substantially continuous on one plane only. This avoids several deflections for the combustion air to be introduced which are of common prior art and lead to a decrease in pressure. The embodiment according to the invention needs therefore fewer deflections for the combustion air so that the decrease in pressure is also less before it reaches the cylinder inlets.

Furthermore, it is possible to realize a compact assembly because of the arrangement of the unit according to the invention right at the cylinder head no additional installation space is required beside the cylinder head or the engine block.

The integration of the charge-air cooler into the housing of the intake device can be realized in such a way that fixing screws by means of which the housing of the intake device has to be fixed at the cylinder head are arranged with a sufficient distance to each other so that an area between them is left free for accepting the charge-air cooler.

Advantageously, a fixing flange is located at the intake housing which can either be designed as forming one piece with the intake housing or as a separate component, however, connected with the intake housing and via which the intake device has to be fixed at the cylinder head of the internal combustion engine. The fixing flange is - with regard to its geometry - adapted to the cylinder head upper surface and features the apertures for the combustion air which correspond with the cylinder inlets in the cylinder head. The fixing flange is advantageously screwed to the cylinder head. The charge-air cooler is arranged indirectly or directly at the fixing flange on the flange's side facing away from the cylinder head. Due to the positioning of the intake housing including the charge-air cooler therein above the cylinder head no bent intake ports are necessary via which the air from the central intake plenum chamber in the intake device is distributed to the individual cylinders. In fact, it is sufficient to connect the intake plenum chamber directly via the apertures with the cylinder inlets.

The charge-air cooler can be fixed in the intake housing in different ways. One possibility would be, for example, either a positive fixing or a non-positive fixing by clamping it in the housing. In addition, the charge-air cooler can also be fixed, and especially screwed, as usual by means of fixing devices.

According to the invention a by-pass is provided for in the intake device and charge-air cooler unit that bridges the charge-air cooler so that the introduced combustion air flow can be conveyed optionally directly via the apertures to the cylinder inlets by by-passing the charge-air cooler. This operating method is particularly used after a cold start of the internal combustion engine in order to convey the combustion air pre-heated through compression without cooling directly to the engine, thus obtaining a faster warming-up of the engine as well as of the downstream exhaust-gas purification devices. Advantageously, a control valve is allocated to the by-pass that conveys the air flow depending to the surrounding conditions either into the charge-air cooler or into the by-pass.

Furthermore, it can be appropriate - in case the internal combustion engine is equipped with an exhaust gas recirculation system - to provide an exhaust gas cooler either in or at the intake housing. During certain operating stages of the internal combustion engine, especially in the partial-load range, a partial mass flow of the exhaust gas is conveyed via such an exhaust air recirculation system from the exhaust gas system via the recirculation line into the intake system where it is added to the supplied combustion air. The recirculated exhaust gas is cooled down in the exhaust gas cooler. By integrating the exhaust gas cooler into or at the intake housing it is possible to achieve another simplified construction as well as a particularly compact design of the intake device including charge-air cooler and exhaust gas cooler. In this case, it may be appropriate to place the exhaust gas cooler in relation to the flow direction of the charge air beside the charge-air cooler.

### Brief description of the drawings

Other advantages and appropriate embodiments can be taken from further claims, figure description and drawings where:
Fig. 1 shows a perspective representation of an intake device and charge-air cooler unit with a fixing flange allocated to the intake device by means of which the unit has to be secured at the cylinder head of an internal combustion engine,
Fig. 2 shows a side view of an intake device for a charge-air cooler unit,
Fig. 3 shows a perspective representation of the unit with the intake housing of the intake device in which the charge-air cooler is installed,
Fig. 4 shows another example of an embodiment of an intake device and charge-air cooler unit which in addition features an exhaust gas cooler.

The figures show the identical components with the same reference signs.

### Embodiment(s) of the invention

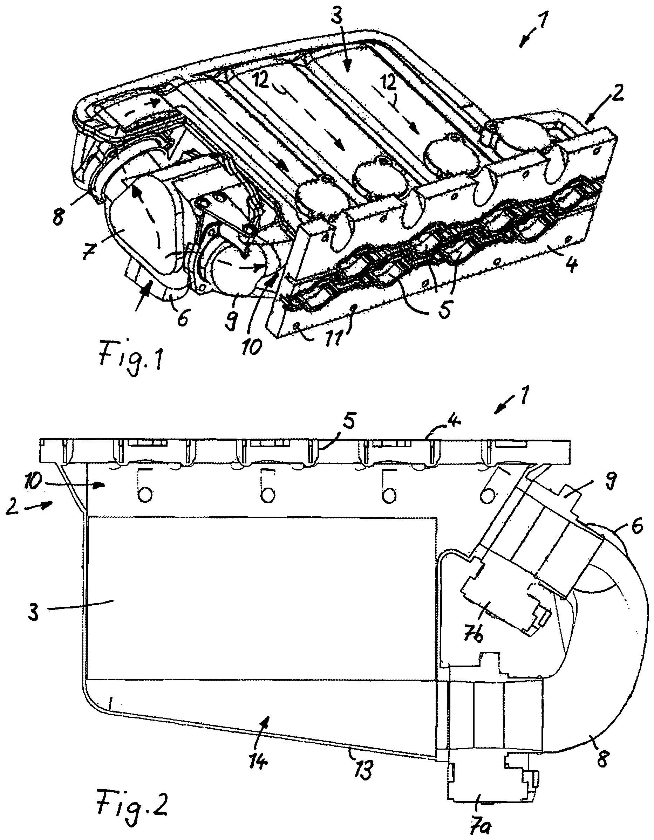

The intake device and charge-air cooler unit 1 represented in fig. 1 comprises an intake device 2 via which combustion air has to be conveyed to an internal combustion engine, for example a diesel engine or an Otto engine. In addition, the unit 1 comprises a charge-air cooler 3 integrated in the intake housing of the intake device 2. The charge-air cooler 3 serves to cool down the compressed combustion air which is compressed in an upstream compressor which can either be part of an exhaust-gas turbocharger or designed as a stand-alone motorized compressor. Part of the intake device 2 is a fixing flange 4 which is advantageously part of the intake housing of the intake device 2. The mounting of the complete unit 1 at the cylinder head of the internal combustion engine is done by means of the fixing flange 4. The fixing flange 4 is in particular designed in a single piece with the intake housing; however, an embodiment designed as separate component which is firmly fixed to the intake housing is also possible.

A plurality of apertures 5 are realized in the fixing flange 4 which - when the unit is mounted - directly abut against the cylinder inlets at the cylinder head and correspond with the cylinder inlets. The combustion air is conveyed to the cylinders of the internal combustion engine via the apertures 5.

The charge-air cooler 3 is located at the side of the fixing flange 4 facing away from the apertures 5. The charge-air cooler 3 is incorporated in the intake housing which is not represented in fig.1 and fixed to the fixing flange 4 or to any other component of the intake housing. The air supply into the intake device and charge-air cooler unit 1 is ensured via an inflow port 6 which leads to a control valve 7 from where the incoming combustion air depending on the position of the control valve 7 is conveyed alternatively via a duct section 8 to the inlet side of the charge-air cooler 3 or via a by-pass 9 by by-passing the charge-air cooler 3 directly into an air duct 10 which forms an intake plenum chamber directly located at the fixing flange 4 which communicates with the apertures 5 in the fixing flange 4. This operating method with open by-pass 9 and by-passing the charge-air cooler 3 is carried out especially after a cold start in order to reach a quick heating of the internal combustion engine as well as of the exhaust-gas purification systems located downstream of the internal combustion engine. In regular operation, however, the bypass 9 is closed by means of a corresponding switching position of the control valve 9 and the incoming combustion air is supplied via the duct section 8 into the charge-air cooler 3 where the compressed combustion air is cooled down. The cooled down combustion air is then supplied into the air duct 10 at the fixing flange 4 and from there via the apertures into the cylinder inlets of the internal combustion engine. To switch the control valve 7 an actuator is provided for which is actuated by means of actuating signals emitted by a regulating and control unit of the internal combustion engine. The fixing flange 4 has boreholes 11, through which the screws can be inserted by means of which the complete unit 1 has to be fixed at the cylinder head of the internal combustion engine. The charge-air cooler 3 is integrated into the unit 1 in such a way that the through-flow direction with the reference sign 12 is directed vertically in relation to the plane of the fixing flange 4 and the apertures 5 contained therein. The advantage of this embodiment is the small number of deflections to be taken by the combustion air introduced into the unit 1 and flowing through it. In particular, once the combustion air has entered the charge-air cooler 3, no deflection is required; the combustion air can rather flow through the charge-air cooler 3 straight forward and can be drained off the unit 1.

In the example of an embodiment according to fig. 2, the intake housing 13 can be seen in which the charge-air cooler 3 is integrated. Represented in fig. 2 is also the air duct 10 which projects in parallel to the fixing flange 4 and transversely to the through-flow direction through the charge-air cooler and directly abuts against the fixing flange. Apertures 5 which are contained in the fixing flange 4 bifurcate from the air duct 10. The air intake section leading to unit 1 is shown in fig. 2 in a modified version. Two separate control valves 7a and 7b are designed as throttle valve each and can be switched between a closing position and an opening position. The first throttle valve 7a is located in the duct section 8 which bifurcates from the inflow port 6 and leads to the inlet of the charge-air cooler 3. The second throttle valve 7b is located in the by-pass 9 which connects the inflow port 6 with the air duct 10 by by-passing the charge-air cooler 3. The duct section 8 leads into an inflow duct 14 integrated in the intake housing 13 and located directly upstream of the charge-air cooler 3.

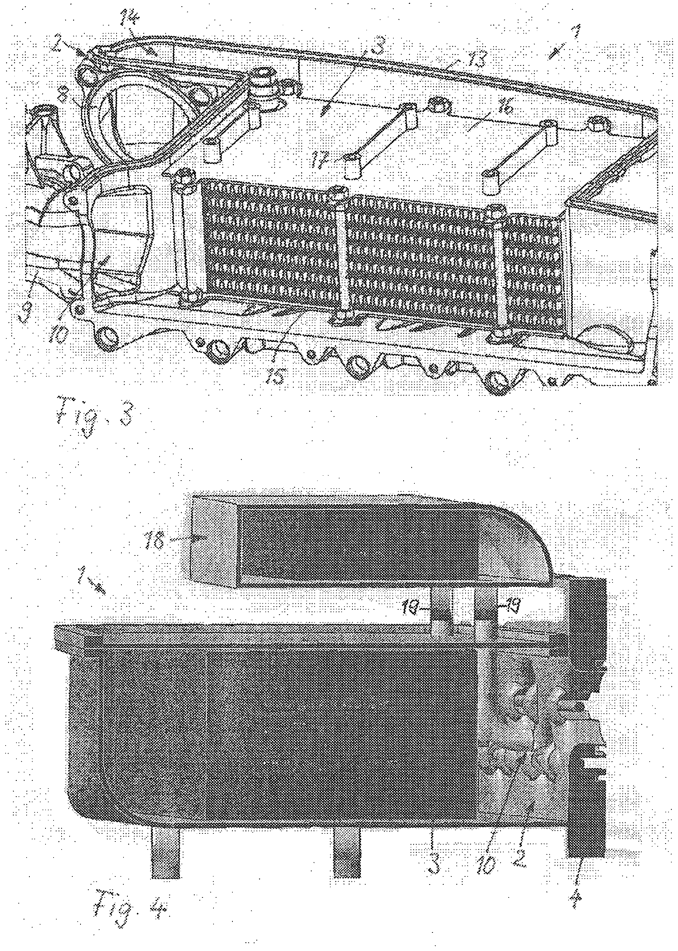

As it can be taken from fig. 3 the charge-air cooler 3 has a lamella structure which is enclosed between a bottom plate 15 and a cover plate 16 which form the housing of the charge-air cooler. Bottom plate 15 and cover plate 16 are screwed together. The charge-air cooler 3 can be screwed to the intake housing 13 of the intake device 2; to do this, weld nuts 17 are located at the metal plates 15 and 16. In another embodiment (not shown) the charge-air cooler can be made of a core of plates brazed together, said core being fixed to the intake housing. As in the previous embodiment, some fins can be provided between the plates to enhance the heat exchange.

In the example of the embodiment according to fig. 4, the unit 1 comprises in addition to the intake device 2 and the charge-air cooler 3 an exhaust gas cooler 18 which is either integrated into the housing of the intake device 2 or affixed to the outside of the intake housing, so that the exhaust gas cooler 18 is also in a constructive sense a part of the unit 1. Functionally, the exhaust gas cooler 18 belongs to an exhaust-gas recirculation system via which exhaust gas is conveyed from the exhaust gas system via a recirculation line into the intake system where the exhaust gas is added to the combustion air. In this example this is realized via lines 19 which lead into the air duct 10 that communicates via the apertures in the fixing flange 4 with the cylinder inlets.

## Claims

1. Intake device and charge-air cooler unit for an internal combustion engine, with an intake housing (13) of the intake device (2) via which combustion air can be supplied to the cylinders of the internal combustion engine, wherein the intake housing (13) has to be affixed to the cylinder head of the internal combustion engine and the combustion air to be conveyed via apertures (5) into cylinder inlets in the cylinder head, and with a charge-air cooler (3), the charge-air cooler is integrated into the intake housing in such a way that the flow direction of the charge air in the charge-air cooler is situated on a plane perpendicular to the component of the intake housing, the flange (4), containing the apertures, **characterized in that** the air supply into the intake device and charge-air cooler unit (1) is ensured via an inflow port (6) which leads to a control valve (7) from where the incoming combustion air depending on the position of the control valve (7) is conveyed alternatively via a duct section (8) to the inlet side of the charge-air cooler (3) or via a by-pass (9) by by-passing the charge-air cooler (3) directly into an air duct (10) which forms an intake plenum chamber directly located at the fixing flange (4) which communicates with the apertures (5) in the fixing flange (4).

2. Intake device and charge-air cooler unit according to claim 1, **characterized in that** a fixing flange (4) is located at the intake housing (13) by means of which the intake device (2) is affixed to the cylinder head of the internal combustion engine.

3. Intake device and charge-air cooler unit according to claim 1, **characterized in that** the fixing flange (4) has upper and lower means of fixation of the intake housing to the engine, wherein said upper and lower fixation means being respectively located above and under the apertures (5), and wherein the fixing flange (4) thereby defines a height h between the upper and lower fixation means, and wherein the charge-air cooler unit has a height h' which is smaller than height h.

4. Intake device and charge-air cooler unit according to claim 2 or 3, **characterized in that** the charge-air cooler (3) is located directly upstream of the fixing flange (4).

5. Intake device and charge-air cooler unit according to one of the claims 1 to 3, **characterized in that** the charge-air cooler (3) is mounted in the intake housing (13) and affixed therein, especially in a positive or frictionally engaged mounting.

6. Intake device and charge-air cooler unit according to one of the claims 1 to 4, **characterized in that** a control valve (7) is located in the intake housing (13) via which the incoming air flow can be conveyed either into the charge-air cooler (3) or into a by-pass (9) that by-passes the charge-air cooler (3).

7. Intake device and charge-air cooler unit according to one of the claims 1 to 5, **characterized in that** in addition an exhaust gas cooler (18) is located at the intake housing (13) via which exhaust gas recirculated via the intake system of an exhaust gas recirculation device has to be cooled.

8. Intake device and charge-air cooler unit according to claim 7, **characterized in that** the exhaust gas cooler (18) is located beside the charge-air cooler (3) in relation to the flow direction (12) of the charge air.

## Patentansprüche

1. Ansaugvorrichtung und Ladeluftkühlereinheit für einen Verbrennungsmotor mit einem Ansauggehäuse (13) der Ansaugvorrichtung (2), über das Verbrennungsluft an die Zylinder des Verbrennungsmotors geliefert werden kann, wobei das Ansauggehäuse (13) an dem Zylinderkopf des Verbrennungsmotors befestigt ist und die Verbrennungsluft über Durchbrechungen (5) in Zylindereinlässe in dem Zylinderkopf gefördert wird, und mit einem Ladeluftkühler (3), wobei der Ladeluftkühler in das Ansauggehäuse so integriert ist, dass die Strömungsrichtung der Ladeluft in dem Ladeluftkühler an einer Ebene rechtwinklig zu der Komponente des Ansauggehäuses angeordnet ist, wobei der Flansch (4) die Durchbrechungen enthält, **dadurch gekennzeichnet, dass** die Luftversorgung in die Ansaugvorrichtung und die Ladeluftkühlereinheit (1) über einen Zustromdurchlass (6) sichergestellt ist, der zu einem Steuerventil (7) führt, von dem die eintretende Verbrennungsluft abhängig von der Position des Steuerventils (7) wahlweise über einen Kanalabschnitt (8) der Einlassseite des Ladeluftkühlers (3) oder über einen Bypass (9) durch Umgehung des Ladeluftkühlers (3) direkt in einen Luftkanal (10) gefördert wird, der eine Ansaugsammelkammer bildet, die direkt an dem Befestigungsflansch (4) angeordnet ist, der mit den Durchbrechungen (5) in dem Befestigungsflansch (4) kommuniziert.

2. Ansaugvorrichtung und Ladeluftkühlereinheit nach Anspruch 1, **dadurch gekennzeichnet, dass** ein Befestigungsflansch (4) an dem Ansauggehäuse (13) angeordnet ist, mit dem die Ansaugvorrichtung (2) an dem Zylinderkopf des Verbrennungsmotors befestigt ist.

3. Ansaugvorrichtung und Ladeluftkühlereinheit nach Anspruch 1, **dadurch gekennzeichnet, dass** der Befestigungsflansch (4) ein oberes und unteres Mittel zur Befestigung des Ansauggehäuses an dem Motor aufweist, wobei das obere und untere Befestigungsmittel jeweils oberhalb und unterhalb der Durchbrechungen (5) angeordnet sind und wobei der Befestigungsflansch (4) dadurch eine Höhe h zwischen dem oberen und unteren Befestigungsmittel definiert, und wobei die Ladeluftkühlereinheit eine Höhe h' aufweist, die kleiner als die Höhe h ist.

4. Ansaugvorrichtung und Ladeluftkühlereinheit nach einem der Ansprüche 2 oder 3, **dadurch gekennzeichnet, dass** der Ladeluftkühler (3) direkt stromaufwärts des Befestigungsflansches (4) angeordnet ist.

5. Ansaugvorrichtung und Ladeluftkühlereinheit nach einem der Ansprüche 1 bis 3, **dadurch gekennzeichnet, dass** der Ladeluftkühler (3) in dem Ansauggehäuse (13) montiert und darin insbesondere in einer positiven bzw. in Reibeingriff stehenden Befestigung befestigt ist.

6. Ansaugvorrichtung und Ladeluftkühlereinheit nach einem der Ansprüche 1 bis 4, **dadurch gekennzeichnet, dass** ein Steuerventil (7) in dem Ansauggehäuse (13) angeordnet ist, über das die eintretende Luftströmung entweder in den Ladeluftkühler (3) oder in einen Bypass (9) gefördert werden kann, der den Ladeluftkühler (3) umgeht.

7. Ansaugvorrichtung und Ladeluftkühlereinheit nach einem der Ansprüche 1 bis 5, **dadurch gekennzeichnet, dass** zusätzlich ein Abgaskühler (18) an dem Ansauggehäuse (13) angeordnet ist, über den Abgas, das über das Ansaugsystem einer Abgasrückführungsvorrichtung rückgeführt wird, gekühlt wird.

8. Ansaugvorrichtung und Ladeluftkühlereinheit nach Anspruch 7, **dadurch gekennzeichnet, dass** der Abgaskühler (18) neben dem Luftladekühler (3) in Bezug auf die Strömungsrichtung (12) der Ladeluft angeordnet ist.

## Revendications

1. Unité à dispositif d'admission et refroidisseur d'air de suralimentation pour un moteur à combustion interne, ayant un boîtier d'admission (13) du dispositif d'admission (2) par l'intermédiaire duquel l'air de combustion peut être fourni aux cylindres du moteur à combustion interne, où le boîtier d'admission (13) doit être apposé à la culasse du moteur à combustion interne et l'air de combustion doit être acheminé par l'intermédiaire d'ouvertures (5) dans des entrées de cylindre dans la culasse, et ayant un refroidisseur d'air de suralimentation (3), le refroidisseur d'air de suralimentation est intégré dans le boîtier d'admission de sorte que la direction d'écoulement de l'air de suralimentation dans le refroidisseur d'air de suralimentation soit située dans un plan perpendiculaire au composant du boîtier d'admission, la bride (4), contenant les ouvertures, **caractérisée en ce que** l'alimentation d'air dans l'unité à dispositif d'admission et refroidisseur d'air de suralimentation (1) est assurée par l'intermédiaire d'un orifice d'écoulement d'entrée (6) qui mène à une valve de commande (7) d'où l'air de combustion entrant en fonction de la position de la valve de commande (7) est acheminé de manière alternative par l'intermédiaire d'une section de conduit (8) vers le côté d'entrée du refroidisseur d'air de suralimentation (3) ou par l'intermédiaire d'une dérivation (9) en contournant le refroidisseur d'air de suralimentation (3) directement dans un conduit d'air (10) qui forme un plénum d'admission situé directement au niveau de la bride de fixation (4) qui communique avec les ouvertures (5) dans la bride de fixation (4).

2. Unité à dispositif d'admission et refroidisseur d'air de suralimentation selon la revendication 1, **caractérisée en ce qu'**une bride de fixation (4) est située au niveau du boîtier d'admission (13) au moyen de laquelle le dispositif d'admission (2) est apposé à la culasse du moteur à combustion interne.

3. Unité à dispositif d'admission et refroidisseur d'air de suralimentation selon la revendication 1, **caractérisée en ce que** la bride de fixation (4) a des moyens de fixation supérieur et inférieur du boîtier d'admission au moteur, où lesdits moyens de fixation supérieur et inférieur étant situés respectivement au-dessus et en dessous des ouvertures (5), et où la bride de fixation (4) définit ainsi une hauteur h entre les moyens de fixation supérieur et inférieur, et où l'unité à refroidisseur d'air de suralimentation a une hauteur h' qui est inférieure à la hauteur h.

4. Unité à dispositif d'admission et à refroidisseur d'air de suralimentation selon la revendication 2 ou 3, **caractérisée en ce que** le refroidisseur d'air de suralimentation (3) est situé directement en amont de la bride de fixation (4).

5. Unité à dispositif d'admission et refroidisseur d'air de suralimentation selon l'une des revendications 1 à 3, **caractérisée en ce que** le refroidisseur d'air de suralimentation (3) est monté dans le boîtier d'admission (13) et apposé dans celui-ci, en particulier dans un montage par complémentarité de forme ou par engagement par friction.

6. Unité à dispositif d'admission et refroidisseur d'air de suralimentation selon l'une des revendications 1 à 4, **caractérisée en ce qu'**une valve de commande (7) est située dans le boîtier d'admission (13) par l'intermédiaire de laquelle le flux d'air entrant peut être acheminé dans le refroidisseur d'air de suralimentation (3) ou dans une dérivation (9) qui contourne le refroidisseur d'air de suralimentation (3).

7. Unité à dispositif d'admission et refroidisseur d'air de suralimentation selon l'une des revendications 1 à 5, **caractérisée** en plus en ce qu'un refroidisseur de gaz d'échappement (18) est situé au niveau du boîtier d'admission (13) par l'intermédiaire duquel les gaz d'échappement remis en circulation par l'intermédiaire du système d'admission d'un dispositif de recirculation des gaz d'échappement doivent être refroidis.

8. Unité à dispositif d'admission et refroidisseur d'air de suralimentation selon la revendication 7, **caractérisée en ce que** le refroidisseur des gaz d'échappement (18) est situé à côté du refroidisseur d'air de suralimentation (3) par rapport à la direction d'écoulement (12) de l'air de suralimentation.
